# EUROPEAN PATENT APPLICATION

(11) **EP 4 703 900 A1**
(43) Date of publication of application: **04.03.2026**
(21) Application number: 25198525.5
(22) Date of filing: 27.08.2025
(51) Int. Cl.: G06F 16/172, G01N 3/00, G05B 19/4097

(54) **LOCAL FILE ACCESS IN DISTRIBUTED MATERIAL TESTING SYSTEMS**

(30) Priority: 27.08.2024 US 202463687495 P; 25.08.2025 US 202519308875
(71) Applicant: Illinois Tool Works Inc., Glenview IL 60025 (US)
(72) Inventor: CAESAR, Daniel Vincent, Glenview, Glenview (US); NICOL, Scott, Glenview, 60025 (US); MORSE, Jason, Glenview, 60025 (US)
(74) Representative: HGF

(57) **Abstract**

Described herein are examples of distributed material testing systems that store local copies of selected files/data used for material testing, so that at least some material testing can continue in at least some capacity if a central data repository becomes inaccessible. In some examples, during normal operation, files/data used for material testing are stored in the central data repository so that the several material testing systems connected to the central data repository can each use the same files/data. However, if access to the central data repository becomes temporarily interrupted, the local file/data copies may be used by a local material testing system to conduct material tests.

## Description

### CROSS REFERENCE TO RELATED APPLICATIONS

This application claims priority to, and the benefit of, U.S. Provisional Patent Application No. 63/687,495, filed August 27, 2024, entitled "LOCAL FILE ACCESS IN DISTRIBUTED MATERIAL TESTING SYSTEMS," the entire contents of which are hereby incorporated by reference.

### TECHNICAL FIELD

The present disclosure generally relates to distributed material testing systems and, more particularly, to local file access in distributed material testing systems.

### BACKGROUND

Material testing machines are used to test the properties (e.g., tensile/compressive strength) of various material specimens. The particular method of testing (a.k.a. test method) may vary from material specimen to material specimen.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to local file access in distributed material testing systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example material testing system, in accordance with aspects of this disclosure.
FIG. 2 shows a block diagram of the example material testing system of FIG. 1, in accordance with aspects of this disclosure.
FIG. 3 shows a block diagram of an example distributed material testing system, in accordance with aspects of this disclosure.
FIG. 4 shows an example of a central data repository of the example distributed material testing system of FIG. 3, in accordance with aspects of this disclosure.
FIG. 5 shows an example of a local data repository of the example distributed material testing system of FIG. 3, in accordance with aspects of this disclosure.
FIG. 6 shows a flowchart illustrating an example local file/data access process of the distributed material testing system of FIG. 3, in accordance with aspects of this disclosure.
FIGS. 7a-7c are examples of graphical user interfaces (GUIs) that might be shown during the example local file/data access process of FIG. 6, in accordance with aspects of this disclosure.

The figures are not necessarily to scale. Where appropriate, the same or similar reference numerals are used in the figures to refer to similar or identical elements. For example, reference numerals utilizing lettering (e.g., grip 124a, grip 124b) refer to instances of the same reference numeral that does not have the lettering (e.g., grips 124).

### DETAILED DESCRIPTION

Disclosed herein are examples of distributed material testing systems that store local copies of selected test files (and/or other files/data) used for material testing, in case a central data repository that stores all the test files (and/or the other files/data) becomes inaccessible. In some examples, all the test files (and/or the other files/data) are stored in a central data repository so that the several material testing systems connected to the central data repository can each use the same test file. Storing the test files (and/or the other files/data) in a central data repository can be useful to ensure all material testing systems are using the same files, as well as to save storage space (as a single copy of the test file may be stored rather than each material testing system having its own copy).

However, inevitably there are times when access to the central data repository is interrupted, such as, for example, because of some interrupted connection to a communication network connecting each material testing system to the central data repository. In such situations, access to the files/data used for operation of the material testing systems may also be interrupted and/or unavailable. This disclosure therefore contemplates storing (e.g., redundant) local copies of selected files/data used for material testing in a local data repository, so that at least some material testing can continue in at least some capacity if the central data repository (and/or communication network) becomes inaccessible.

Some examples of the present disclosure relate to a non-transitory computer readable medium comprising: machine readable instructions which, when executed by processing circuitry, cause the processing circuitry to: determine, based on file accessibility data, whether a remote file stored in a remote data repository should remain accessible when the remote data repository, or a communication network connecting a testing workstation to the remote data repository, becomes inaccessible to the testing workstation, in response to determining the remote file should remain accessible, create a local file copy of the remote file and store the local file copy, while the remote data repository remains accessible to the testing workstation through the communication network, periodically update the local file copy based on the remote file, and in response to the remote data repository, or the communication network, being inaccessible to the testing workstation, make the local file copy available to the testing workstation.

In some examples, the remote file comprises: a remote test file that defines a method of conducting a test of a material specimen on a material testing machine, or of analyzing test results of the test, a test result file that is representative of the test results, a remote event record that indicates when one or more events occurred during use of a material testing system, the material testing system comprising the material testing machine and a testing workstation configured to control the material testing machine to conduct the test of the material specimen, or remote settings representative of a security setting, a traceability setting, a user setting, or a team setting. In some examples the security setting indicates which users have permission to access, edit, or execute a test file, or the traceability setting indicates how many reviews are needed before a test file can become active. In some examples, the user setting indicates an identifier or credential of a user, or the team setting indicates a particular team to which a particular user belongs.

In some examples, the machine readable instructions, when executed by processing circuitry, further cause the processing circuitry to: while the remote data repository remains accessible to the testing workstation through the communication network, periodically determine whether a change has been made to the remote file, and in response to determining the change has been made to the test file, update the local file copy based on the change to the remote file. In some examples, the machine readable instructions, when executed by processing circuitry, further cause the processing circuitry to send the local test file copy to the remote data repository after the remote data repository or the communication network again becomes accessible to the testing workstation. In some examples, the machine readable instructions, when executed by processing circuitry, further cause the processing circuitry to update the file accessibility data based on the one or more file accessibility signals received from a user interface, the one or more file accessibility signals indicating whether the remote file should remain accessible when the remote data repository is inaccessible to the testing workstation.

Some examples of the present disclosure relate to a material testing system, comprising: a material testing machine, comprising a test machine sensor, a test machine actuator, and a test machine controller configured to control the test machine actuator; a testing workstation configured to communicate with the test machine controller to conduct a test on the material testing machine, or analyze test results of the test, according to a test method set forth in a test file; a remote data repository storing a remote test file, the remote data repository being communicatively connected with the testing workstation through a communication network; a local data repository; and a local server comprising or in communication with the local data repository, the local server being in communication with the remote data repository through the communication network, the local server comprising server processing circuitry configured to: determine, based on file accessibility data, whether the remote test file should remain accessible when the testing workstation becomes disconnected from the communication network or the remote data repository, in response to determining the remote test file should remain accessible, store a local test file copy of the remote test file in the local data repository, while the local server remains in communication with the remote data repository through the communication network, periodically update the local test file copy, or create a new version of the local test file copy, based on the remote test file, and in response to the testing workstation becoming disconnected from the communication network or the remote data repository, make the local test file copy available to the testing workstation to conduct the test with the material testing machine, or analyze the test results.

In some examples, the testing workstation is in direct communication with the local server or the local data repository, rather than being in communication through the communication network, or the testing workstation comprises the local server or the local data repository. In some examples, the server processing circuitry is configured to: while the local server remains in communication with the remote data repository through the communication network, periodically determine whether a change has been made to remote test file, and in response to determining the change has been made to the remote test file, update the local test file copy based on the change to the remote test file, or create the new version of the local test file copy based on the remote test file. In some examples, the local server is configured to send the local test file copy to the remote data repository after the testing workstation is reconnected with the communication network or the remote data repository.

In some examples, the remote data repository is configured to update the remote test file based on a difference between the remote test file and the local test file copy. In some examples, the system further comprises a user interface in communication with the testing workstation, the user interface configured to receive an input from a user indicating whether the remote test file should remain accessible when the remote data repository is inaccessible. In some examples, the testing workstation is configured to send one or more file accessibility signals to the local server based on the input, and the local server is configured to update the file accessibility data based on the one or more file accessibility signals.

Some examples of the present disclosure relate to a method, comprising: determining, via server processing circuitry, and based on file accessibility data stored in a remote data repository or a local data repository, whether a remote test file should remain accessible to a testing workstation when the remote data repository, or a communication network connecting the testing workstation to the remote data repository, becomes inaccessible to the testing workstation; in response to determining the remote test file should remain accessible, storing a local test file copy of the remote test file in the local data repository via the server processing circuitry; while the remote data repository remains accessible to the testing workstation through the communication network, periodically updating the local test file copy based on the remote test file via the server processing circuitry; and in response to the remote data repository or the communication network becoming inaccessible to the testing workstation, making the local test file copy available to the testing workstation via the server processing circuitry.

In some examples, the local data repository is directly accessible to the testing workstation, rather than being accessible through the communication network, or the testing workstation comprises the local data repository. In some examples, the method further comprises periodically determining, via the server processing circuitry, whether a change has been made to remote test file while the local server remains in communication with the remote data repository through the communication network; and in response to determining the change has been made to the remote test file, updating the local test file copy, via the server processing circuitry based on the change to the remote test file.

In some examples, method further comprises sending the local test file copy to the remote data repository, via the server processing circuitry, after the remote data repository and the communication network once again becomes accessible to the testing workstation. In some examples, method further comprises determining, via the server processing circuitry, whether to update the remote test file based on a difference between the remote test file and the local test file copy; and updating the remote test file based on a difference between the remote test file and the local test tile copy in response to determining to update the remote test file. In some examples, the method further comprises updating the file accessibility data based on user input received via a user interface that is in communication with the testing workstation, the user input indicating whether the remote test file should remain accessible to the testing workstation when the remote data repository is inaccessible to the testing workstation.

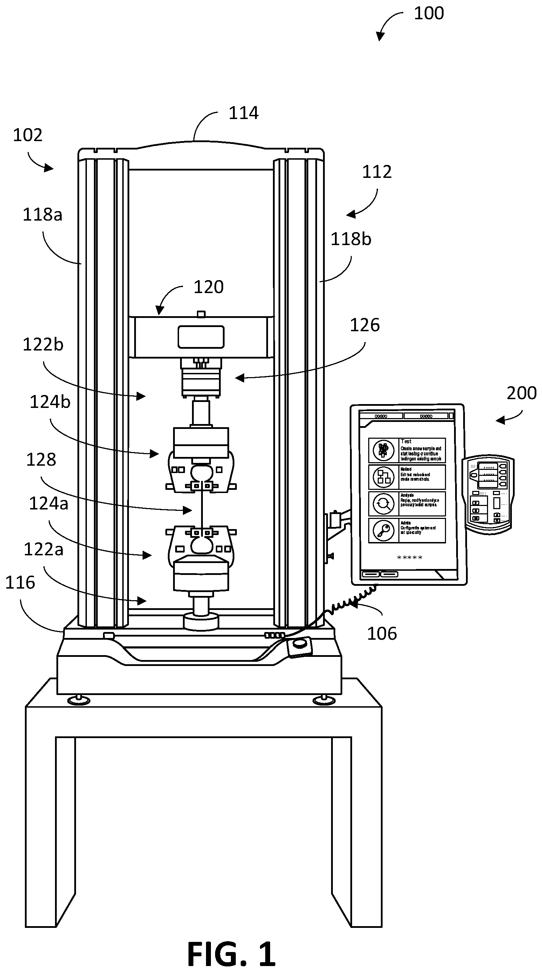

FIG. 1 shows an example material testing system 100. As shown, the material testing system 100 includes a material testing machine 102 (also known as a universal testing machine), and a computing system 200 connected to the material testing machine 102 through cable 106. While shown as being physically connected, in some examples, the connections may be wireless rather than wired.

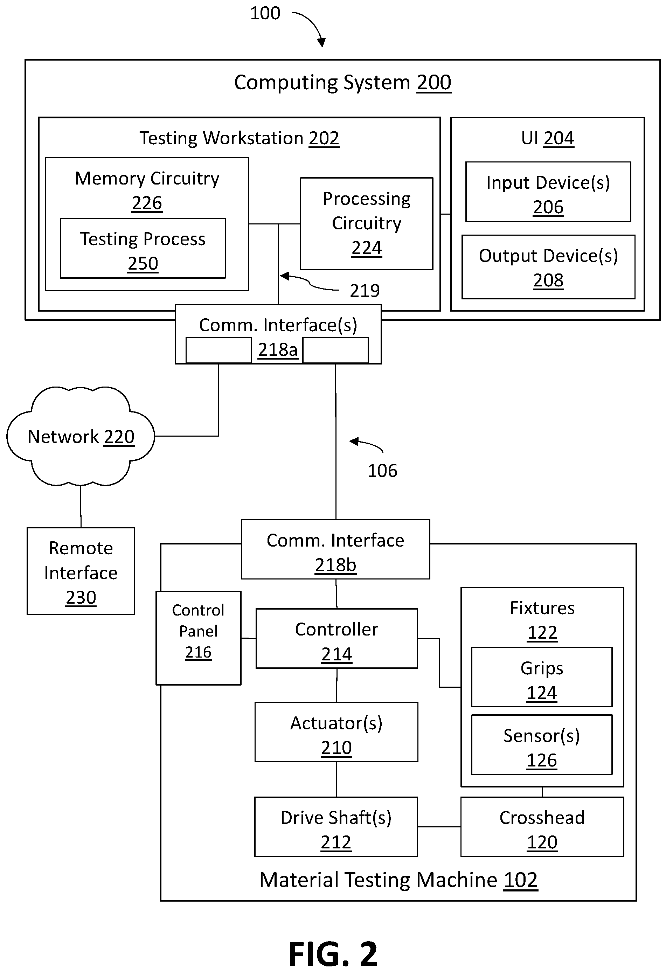

In the example of FIG. 1, the material testing machine 102 includes a frame 112. In some examples, the frame 112 provides rigid structural support for the other components of the material testing machine 102. As shown, the frame 112 comprises a top plate 114 and a bottom base 116 connected by two columns 118. In some examples, the columns 118 of the frame 112 may house guide rails and/or drive shafts 212 of the material testing machine 102 (see, e.g., FIG. 2).

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base 116 through (e.g., motorized) actuation of the drive shaft(s) 212. While one movable crosshead 120 is shown in the example of FIG. 1, in some examples, the material testing machine 102 may have multiple movable crossheads 120, and/or other movable members.

In the example of FIG. 1, a fixture 122 is attached to the bottom base 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the testing machine 102 may include more or fewer test sensors 126 and/or grips 124.

In the example of FIG. 1, the grips 124 are holding a test specimen 128. While shown as a (e.g., steel) rope/wire, in some examples, the test specimen 128 may be some other type of material and/or component. While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor 126 may be a load cell. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 200 to conduct a test method. For example, the computing system 200 may communicate with a controller 214 (see, e.g., FIG. 2) of the material testing machine 102 to conduct the test method.

FIG. 2 is a block diagram showing details of the computing system 200, as well as additional details of the material testing machine 102. In the example of FIG. 2, the example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 200) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensor(s) 126). In some examples, the controller 214 may be configured to translate commands, control inputs, and/or test parameters (e.g., received from the computing system 200) to appropriate (e.g., electrical) signals that may be delivered to the grips 124, to thereby control (e.g., grip or release) operation of the grips 124. In some examples, the controller 214 may be configured to translate commands, control inputs, and/or parameters (e.g., received from the computing system 200) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 200.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a communication interface 218b of the material testing machine 102. In some examples, the communication interface 218b comprises a network interface. In some examples, the communication interface 218b includes hardware, firmware, and/or software to connect the material testing machine 102 to a complementary workstation communication interface 218a of the computing system 200. In some examples, the controller 214 may receive information (e.g., commands) from the computing system 200 through the communication interfaces 218, and/or send information (e.g., measurement data from sensor(s) 126) to the computing system 200 through the workstation communication interfaces 218.

In the example of FIG. 2, the computing system 200 includes a testing workstation 202 and a user interface (UI) 204 interconnected with one another. As shown, the UI 204 may include one or more input devices 206 configured to receive inputs from a user, and one or more output devices 208 configured to provide outputs to the user.

In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the **UI** 204 may output one or more representations of a material testing process 250 configured to allow a user to setup and/or execute a test method and/or analyze test results of the test method. In some examples, the input device(s) 206 of the UI 204 may receive input from a user, and send input data representative of the user input to the testing workstation 202.

In the example of FIG. 2, the example testing workstation 202 includes workstation communication interfaces 218a. In some examples, one or more of the workstation communication interfaces 218a are network interfaces. In some examples, one or more of the workstation communication interfaces 218a comprise hardware, firmware, and/or software configured to facilitate communication between the workstation 202 and one or more external networks, systems, and/or devices.

As shown, one workstation communication interface 218a is in communication with the communication interface 218b of the material testing machine 102 through cable 106. As shown, the testing workstation 202 further includes a workstation communication interface 218a in communication with a network 220 (e.g., the Internet). In the example of FIG. 2, the testing workstation 202 is in communication with a remote interface 230 through the network 220 and workstation communication interface 218a. In some examples, the testing workstation 202 may be in communication with one or more other testing systems, servers, and/or other devices through the network and/or workstation communication interface(s) 218a. As shown, the workstation communication interfaces 218a are electrically connected to a common electrical bus 219 of the testing workstation 202.

In some examples, the testing workstation 202 may be a computing device. In the example of FIG. 2, the testing workstation 202 includes workstation processing circuitry 224 connected to the common electrical bus 219. In some examples, the workstation processing circuitry 224 may comprise one or more processors. In some examples, the workstation processing circuitry 224 is configured to process information received from the UI 204, data importation device(s) 108, and/or material testing machine 102.

In some examples, the workstation processing circuitry 224 is configured to transmit (e.g., via communication interface(s) 218a) commands and/or test parameters to the material testing machine 102. In some examples, the workstation processing circuitry 224 is configured to output information to an operator through the UI 204. In some examples, the workstation processing circuitry 224 is configured to execute machine readable instructions stored in workstation memory circuitry 226.

In the example of FIG. 2, the testing workstation 202 further includes workstation memory circuitry 226 connected to the common electrical bus 219. As shown, the workstation memory circuitry 226 includes a material testing process 250. In some examples, the material testing process 250 comprises machine readable instructions. In some examples, the workstation processing circuitry 224 is configured to execute the machine readable instructions of the material testing process 250 to communicate with (e.g., the controller 214 of) the material testing machine 102 to execute a test of a material specimen 128 (e.g., via execution of a test file 402).

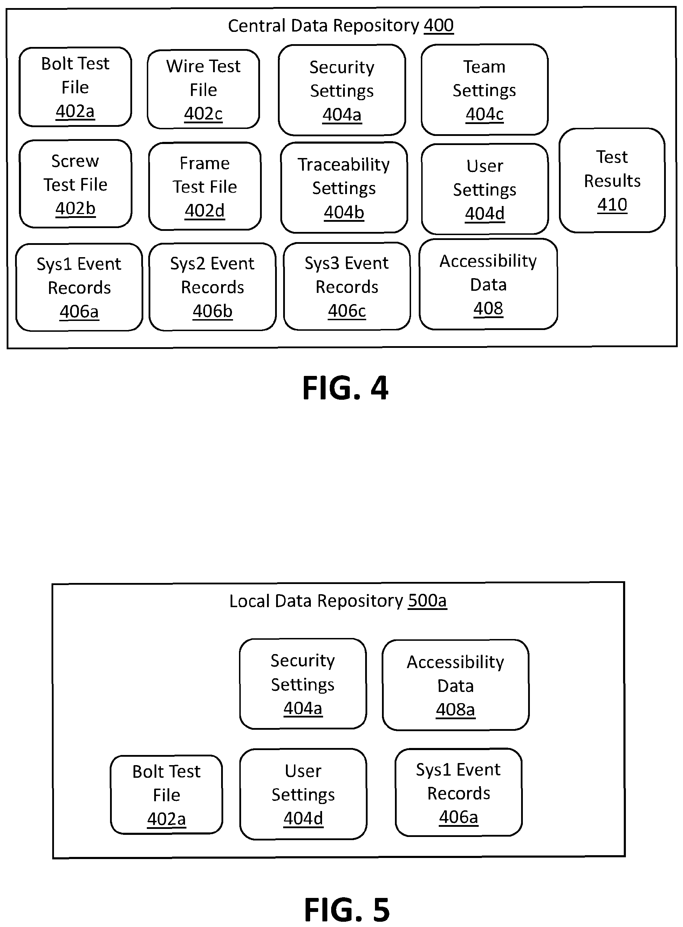

In some examples, a test of a material specimen 128 is performed (and/or its test results analyzed) according to a particular test method. In some examples, the test method is defined by the parameters of a test file 402 (see, e.g., FIGS. 4-5). As used herein, a test file 402 refers to a collection of (e.g., stored) data that is representative of one or more (e.g., test, sample/specimen, analysis, etc.) parameters that (at least partially) define a test method.

For example, test parameters of the test file 402 may include a date the test will be run, identification information of the test (e.g., number, name, type, description, etc.), target start/end positions of grip(s) 124, target start/end positions of the crosshead 120, target distance/direction moved by crosshead 120, target speed of movement of crosshead 120, expected result(s) of test (e.g., position/type of break, distance moved before break, force applied before break, post-test characteristics of sample, etc.), time(s) when sensor(s) 126 should take measurement(s), and/or other relevant to a particular test method.

As another example, specimen parameters may include, a date the specimen 128 was manufactured/shipped/packaged, identification information of the specimen 128 (e.g., number, name, description, etc.), pre-test characteristics of the specimen 128 (e.g., measurements/dimensions, material type, weight, color, shape, modulus, ultimate tensile strength, etc.), and/or other information relevant to a particular specimen 128. As another example, analysis parameters may include one or more algorithms that may be used to evaluate results of the test method (and/or produce additional test results), one or more test result report format(s), and/or one or more thresholds and/or threshold ranges (e.g., by which test results may be adjudged to determine whether the specimen 128 passed or failed the test). In some examples, the parameters represented by a test file 402 may be used to setup and/or execute a test method, and/or analyze the subsequent test results of the test method.

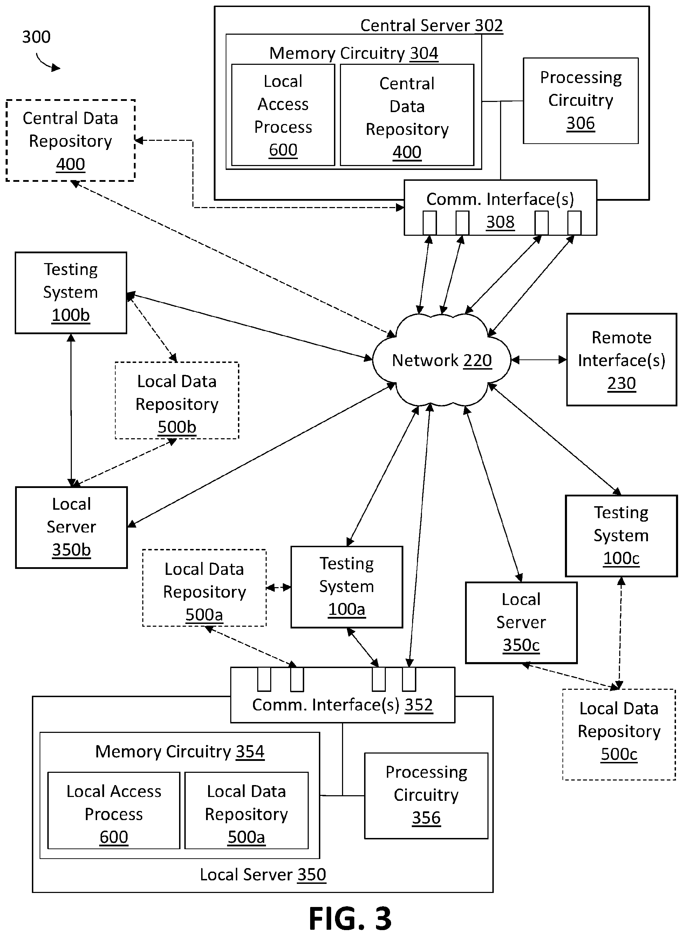

FIG. 3 shows an example of a distributed material testing system 300 having a central data repository 400 that stores a plurality of test files 402 (see FIG. 4) that may be used by a plurality of material testing systems 100. In some examples, storing test files 402 in a central data repository 400 may be helpful when there are several material testing systems 100 that need to use the same test file 402, as the test file 402 may be used by any material testing system 100 connected and/or in communication with the central data repository 400. Additionally, a single copy of the test file 402 may be stored rather than each material testing system 100 having its own copy. Having a single central copy of the test file 402 stored in a central data repository 400 both saves on memory space, and also helps to ensure that each material testing system 100 is using the same test file 402 (and thereby running the same test method), which may be important for documentation and/or compliance with certain regulations.

In the example of FIG. 3, the central data repository 400 is shown as being part of the server memory circuitry 304 of a central server 302. Several material testing systems 100 are shown as being connected (and/or in communication) with the central server 302, through the central server communication interfaces 308 of the central server 302 and the network 220 (and/or the communication interface(s) 218 of the testing workstation 202). While a certain number of communication interfaces 218/308/352 are shown in the examples of FIGS. 2-3, the number is simply illustrative. In some examples, there may be more or fewer communication interfaces 218/308/352. Through the connection with the central server 302 (e.g., facilitated by the communication interfaces 218/308), the material testing systems 100 are connected (and/or in communication) with the central data repository 400.

In the example of FIG. 3, the central server 302 further includes server processing circuitry 306. In some examples, the server processing circuitry 306 may comprise one or more processors. In some examples, the server processing circuitry 224 is configured execute machine readable instructions stored in the server memory circuitry 304, and/or query the central data repository 400.

In the example of FIG. 3, the distributed material testing system 300 also includes a plurality of local servers 350. As shown, each local server 350 is directly connected (and/or in direct communication with) a material testing system 100 (e.g., a testing workstation 202), rather than being connected through the communication network 220. In this arrangement, the local server 350 will still be available and/or accessible to the material testing system 100 even if the communication network 220 and/or central server 302 becomes inaccessible.

While the local servers 350 are shown as being separate from the material testing system 100 in the example of FIG. 3, in some examples, one or more of the local servers 350 may be implemented via the testing workstation(s) 202 of one or more of the connected material testing systems 100. For example, the components of the testing workstation 202 may operate (at least at some times and/or in some capacity) as components of a local server 350. As another example, machine readable instructions of the testing process 250 and/or stored in the workstation memory circuitry 226 may allow the testing workstation 202 to operate (at least at some times) as a local server 350.

While a certain number of material testing systems 100 and/or local servers 350 are shown in the example of FIG. 3, in some examples, more or fewer material testing systems 100 and/or local servers 350 may be connected with the central server 302 and/or central data repository 400. While shown as part of the server memory circuitry 304 of the central server 302 in the example of FIG. 3, in some examples, the central data repository 400 may alternatively, or additionally, be separate from the central server 302. In such examples, the central server communication interface(s) 308 may additionally be in communication with the central data repository 400.

In the example of FIG. 3, each local server 350 is also communicatively connected to the communication network 220, and through the communication network 220, to the central data repository 400 (e.g., via the central server 302). Through this communication link, the local server 350 can create and/or maintain, in a local data repository 500, local copies of selected files/data stored in the central data repository 400. In some examples, the local server 350 can also synchronize the centralized files/data stored in the central data repository 400 with the local files stored in a local data repository 500 when access to the central data repository 400 and/or communication network 220 is restored after an interruption.

FIG. 3 further shows the components of the local server 350. While the components of only one local server 350 are shown in detail in the example of FIG. 3 for the sake of space, it should be understood that the other local servers 350 may contain similar (or identical) components.

In the example of FIG. 3, each local server 350 includes several local server communication interfaces 352. In some examples, one or more of the local server communication interfaces 352 are network interfaces. In some examples, one or more of the workstation communication interfaces 218a comprise hardware, firmware, and/or software configured to facilitate communication between the local server 350 and one or more external networks, systems, and/or devices.

As shown, the local server communication interfaces 352 connect the local server 350 to a material testing system 100. The local server communication interfaces 352 additionally connect the local server 350 to the communication network 220, and to the central data repository 400 and/or central server 302 (e.g., through the communication network 220). FIG. 3 further shows the local server communication interfaces 352 connecting the local server 350 to a local data repository 500 in examples where the local data repository 500 is not part of local server 350.

In the example of FIG. 3, the local server 350 includes a local data repository 500 as part of the local server memory circuitry 354 of the local server 350. The local server 350 is also shown as including local server processing circuitry 356. The local server processing circuitry 356, local server memory circuitry 354, and local server communication interfaces 352 are all interconnected via a local server bus. In some examples, the material testing system 100 connected with the local server 350 may access the local data repository 500 via one or more signals communicated across the local server bus, to/from the local server memory circuitry 354 and/or local server communication interfaces 352. In some examples, the local data repository 500 may instead be external to, and/or in communication with, the local server 350, as shown in FIG. 3 via dotted lines.

FIGS. 4-5 shows an example of the central data repository 400 and local data repository 500, as well as the data each might store. In some examples, the central data repository 400 and/or local data repository 500 may comprise one or more different data structures (e.g., databases, file systems, look up tables, etc.).

In the example of FIG. 4, the central data repository 400 is shown storing several different test files 402. In some examples, the different test files 402 may define different test methods. In some examples, the different test files 402 may be used to test different types of material specimens 128. In some examples, the different test files 402 may be designed to perform test methods on different types of material testing machines 102.

FIG. 4 additionally shows the central data repository 400 as storing several different types of settings 404. In some examples, the settings 404 may include files and/or other data relating to properties, characteristics, and/or configurations of the distributed material testing system 300. For example, the security settings 404a may be representative of permissions and/or authorizations of one or more users and/or teams. As another example, the security settings 404a may indicate which data, test files 402, and/or testing systems 100 each user and/or team is authorized to use and/or access.

As another example, the traceability settings 404b may indicate the requirements for a test file 402 to be approved for use as the primary ("active") test file 402, from amongst other versions and/or drafts of the test file 402. As another example, team settings 404c may indicate which users belong to which teams, and/or which team members are team leaders. As another example, user settings 404d may indicate user login information (e.g., username, password, biometrics, etc.) and/or account information (e.g., name, identification number, certifications, etc.).

FIG. 4 further shows the central data repository 400 as storing event records 406 pertaining to one or more events that occurred during use of one or more different material testing systems 100. For example, event records 406 may indicate a date/time when a user logged in/out, and/or which user logged in/out. As another example, event records 406 may indicate a date time when a user created, modified, and/or deleted a test file 402 and/or a setting 404, and/or which user created, modified, and/or deleted which test file 402 and/or setting 404. As another example, event records 406 may indicate a date/time of a failed login attempt, an error, a malfunction, a system crash, a fault, a or some other unexpected and/or undesirable event, as well as a description and/or type of the failure, error, malfunction, fault etc.

FIG. 4 additionally shows the central data repository 400 as storing test results 410. In some examples, test results 410 may comprise data representative of the results of one or more tests performed using the material testing machine 102 of a material testing system 100. While shown separately in the example of FIG. 4, in some examples, test results 410 of a test may be stored as part of a test file 402.

FIG. 5 shows the local data repository 500a storing copies of some of the test files 402, settings 404, and/or event records 406 stored by the central data repository 400. In some examples, local copies of the test files 402, settings 404, event records 406, test results 410, and/or other files/data stored by the central data repository 400 may be stored in the local data repository 500 so that the material testing system(s) 100 can continue testing even if access to the central data repository 400 and/or communication network 220 becomes temporarily interrupted. In some examples, without such local copies, it may be difficult (or impossible) for the material testing system(s) 100 to continue testing when access to the central data repository 400 and/or communication network 220 becomes interrupted.

However, not all of the data stored by the central data repository 400 is shown as being copied and/or stored in the local data repository 500a in the example of FIG. 5. This is to illustrate the fact that, in some examples, the distributed material testing system 300 may be customized so that only particular test files 402, settings 404, event records 406, test results 410, and/or other files/data are duplicated and stored in a particular local data repository 500. Additionally, in some examples, the distributed material testing system 300 may prohibit some test files 402, settings 404, event records 406, test results 410, and/or other files/data from being duplicated and/or stored in a local data repository 500 (and/or in particular local data repositories 500).

In the examples of FIG. 4, the central data repository 400 is additionally shown as storing accessibility data 408. In some examples, the accessibility data 408 indicates which files/data should (and/or should not) be copied and stored in which local data repositories 500. For example, the accessibility data 408 may indicate that local copies of the bolt test file 402a, security settings 404a, user settings 404d, and event records 406a should be stored in the local data repository 500a, while other files/data stored by the central data repository 400 should not be stored in the local data repository 500a.

In the example of FIG. 5, the local data repository 500a is also shown as storing accessibility data 408a. In some examples, accessibility data 408 is automatically copied and stored in each local data repository 500 of the distributed material testing system 300. However, in some examples, the accessibility data 408 stored by each local data repository 500 is a subset of the accessibility data 408 stored by central data repository 400.

For example, the local data repository 500a may only store accessibility data 408a relevant to the material testing system 100a. In such an example, the accessibility data 408a might indicate that a local copy of the event records 406a should be stored in the local data repository 500a, and omit mention of any other event records 406, as only the event records 406a are relevant to the material testing system 100a. Additionally, in such an example, the accessibility data 408a might indicate whether local copies of particular test files 402, and not others, should be stored in the local data repository 500a. This might occur, for example, if the material testing system 100a is only authorized and/or capable of using the particular test files 402, and/or if those particular test files 402 are the only test files 402 used by the teams authorized to use the material testing system 100a.

In some examples, the local copies of the files/data stored in the local data repository 500 are periodically synchronized with the original files/data stored in the central data repository 400. In some examples, the synchronization is alternatively, or additionally, in response to user input and/or one or more events, or at other (e.g., user specified) intervals and/or times. This synchronization may ensure that any changes to the original files/data stored in the central data repository 400 are duplicated in the local copies of the files/data stored in the local data repository 500. With this synchronization, the local copies of the files/data stored in the local data repository 500 are less likely to be significantly out of date if and/or when the local copies are needed.

**If** and/or when a material testing system 100 loses access to the central data repository 400 and/or communication network 220, the local file/data copies may be used by the testing system 100 connected to the local data repository 500 instead. Once access to the central data repository 400 and/or communication network 220 is restored, an inverse synchronization may occur, so that any changes to the local copies of the files/data stored in the local data repository 500 that occurred while access to the central data repository 400 was interrupted can be duplicated in the corresponding original files/data stored in the central data repository 400.

In the example of FIG. 3, the local server memory circuitry 354 is shown as storing both the local data repository 500 and a local file/data access process 600. Though shown as part of the local server 350, in some examples some portion(s) of the local file/data access process 600 may be stored in and/or executed by the central server 302 as well. While shown as part of the local server memory circuitry 354 in the example of FIG. 3, in some examples, the local file/data access process 600 may be implemented using discrete circuitry (e.g., of the local server processing circuitry 356). In some examples, the local file/data access process 600 is implemented using non-transitory machine readable instructions stored in the local server memory circuitry 354 and/or executed by the local server processing circuitry 356.

In some examples, the local file/data access process 600 is configured to store local copies of certain data and/or files (e.g., used and/or necessary for material testing) in a local data repository 500, so that at least some material testing can continue in at least some capacity if the central data repository 400 (and/or the files/data it stores) becomes unavailable. In some examples, while the central data repository 400 and/or communication network 220 remains accessible, the local file/data access process 600 periodically synchronizes the data and/or files stored in the local data repository 500 with their counterparts stored in the central data repository 400. **If** access to the central data repository 400 and/or communication network 220 becomes temporarily interrupted, the data and/or files stored in the local data repository 500 may be used by the testing system 100 to conduct material tests instead of the corresponding data and/or files stored in the central data repository. Once access to the central data repository 400 and/or communication network 220 is restored, an inverse synchronization may occur, so that any changes to the local copies of the data and/or files stored in the local data repository 500 that occurred while access to the central data repository 400 was interrupted can be duplicated in the corresponding original data and/or files stored in the central data repository 400.

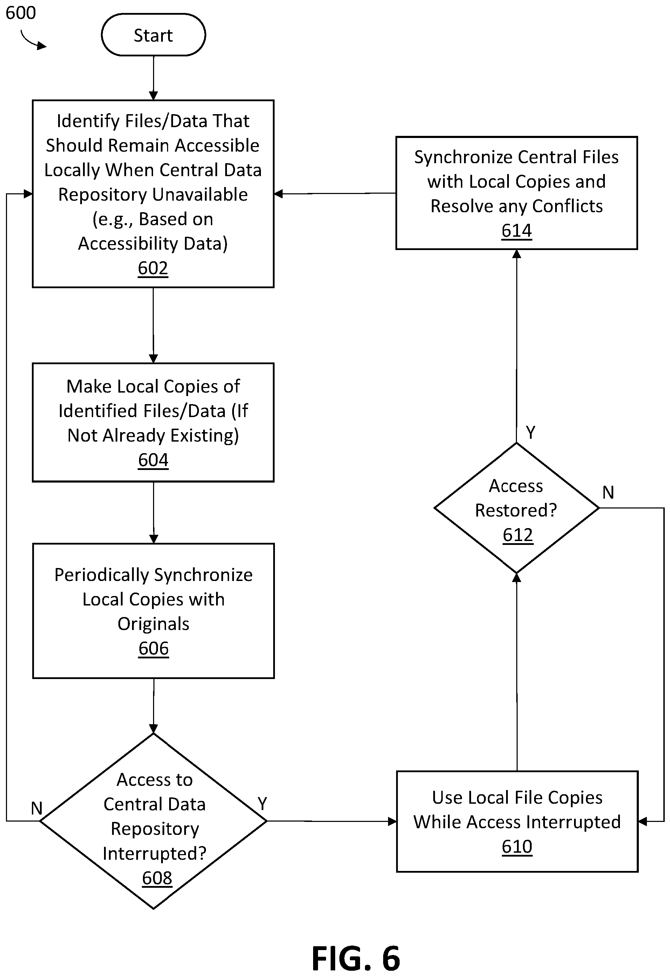

FIG. 6 is a flow diagram showing example operation of the local file/data access process 600. In some examples, before using and/or progressing through the local file/data access process 600, a user may be required to login and/or be authenticated (e.g., using user credentials, biometrics, RFID/NFC/Bluetooth/barcode devices, etc.). While the local file/data access process 600 is sometimes described below as conducting certain actions for the sake of understanding and convenience, it should be understood that one or more of the above described components of the distributed material testing system 300 (e.g., the central server processing circuitry 306, local server processing circuitry 356, remote interface(s) 230, material testing system(s) 100, etc.) may undertake the actions on behalf (and/or according to instructions) of the local file/data access process 600.

In some examples, different instances of the local file/data access process 600 may execute for different users, material testing systems 100, and/or local servers 350. In some examples, each local server 350 executes its own instance of the local file/data access process 600 with respect to its material testing system 100 for at least blocks 604-612 (and potentially at least part of block 602). In some examples, the central server 302 executes an instance of the local file/data access process 600 for at least part of blocks 602 and 614.

In the example of FIG. 6, the local file/data access process 600 begins at block 602, where the local file/data access process 600 identifies a subset of the files/data stored by the central data repository 400 that the local file/data access process 600 should keep accessible in the event the central data repository 400 becomes inaccessible (e.g., to the associated material testing system 100). In some examples, the local file/data subset includes one or several test files 402, settings 404, and/or event records 406 stored by the central data repository 400. In some examples, the identification of the local file/data subset is based on the accessibility data 408 stored in the central data repository 400 and/or local data repository 500.

In some examples, the local file/data access process 600 prompts a user to identify part or all of the local file/data subset (e.g., via the UI 204 and/or remote interface 230). In some examples, the local file/data access process 600 updates the accessibility data 408 stored in the central data repository 400 and/or local data repository 500 based on the user input. In some examples, identification of the local file/data subset is based on and/or in response to input from the user identifying part or all of the data subset (e.g., received via the UI 204 and/or remote interface 230).

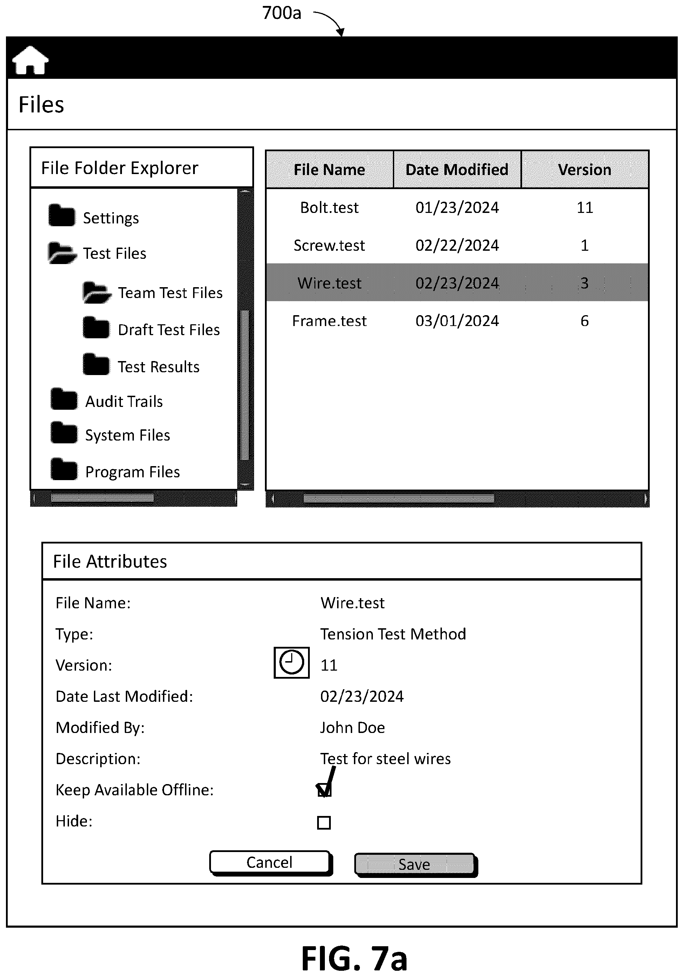

FIG. 7a shows an example of a graphical user interface (GUI) 700a that might be shown to a user at block 602 of the local file/data access process 600 (e.g., via the UI 204 and/or remote interface 230). As shown, the GUI 700a includes a file folder explorer window through which a user might navigate a file system of the central data repository 400 to find particular files/data stored by the central data repository 400 (e.g., test files 402, settings 404, and/or event records 406).

In some examples, the file folder explorer window of the GUI 700a allows a user to select a particular file folder. In the example of FIG. 7a, a list of files in the particular file folder that has been selected is shown via a file list window of the GUI 700a. Also shown is a file attributes window corresponding to the wire test file 402 that has been selected via the file list window.

In the example of FIG. 7a, the file attributes window of the GUI 700a shows attributes of the file selected via the file list window. As shown, the file attributes window allows the user to select different versions of a file (e.g., via the clock icon), and also prompts the user to select whether the local file/data access process 600 should keep the file accessible in the event the central data repository 400 becomes inaccessible (e.g., via the Keep Available Offline checkbox). In some examples, the local file/data access process 600 identifies files/data to include in local file/data subset (and/or updates the accessibility data 408) at block 602 based on whether the user checks the Keep Available Offline checkbox of the file attributes window.

In some examples, the local file/data access process 600 automatically identifies certain files/data for inclusion in the local file/data subset identified at block 602. For example, the user might identify certain test files 402 for inclusion in the local file/data subset, and the local file/data access process 600 may determine that the user identified test files 402 are only used by certain users/teams on a particular subset of material testing machines 102 and/or material testing systems 100. Based on the determination of material testing machines 102 and/or material testing systems 100 corresponding to the user selected test files 402, the local file/data access process 600 may automatically identify event records 406 for the determined material testing machines 102 and/or material testing systems 100 as being included in the local data subset (and/or update the accessibility data 408 accordingly).

In some examples, the local file/data access process 600 may prohibit selection of certain files/data for inclusion in the local file/data subset at identified at block 602. For example, the local file/data access process 600 may allow an administrator (e.g., as identified by the security settings 404a) to select certain test files 402 that should not be stored in one or more particular local data repositories 500 and/or any local data repository 500. In such an example, the accessibility data 408 may be updated to reflect the administrator's selections. In such an example, the local file/data access process 600 may additionally prohibit the user from selecting/identifying the test files 402 identified/selected by the administrator, such as, for example, graying out or otherwise making the user unable to interact with the "Keep Available Offline" box in the file attributes window of the GUI 700a of FIG. 7a.

As another example, the local file/data access process 600 may allow an administrator to select/identify whether settings 404 can and/or should be saved in a local data repository 500. In some examples, a material testing system 100 may be unable to setup a test (or severely hindered in setting up a test) in the absence of availability and/or accessibility of all or some of the settings 404. Thus, an administrator may be able effectively disable a particular material testing system 100 from testing operations when disconnected from the central data repository 400 by selecting that settings 404 cannot be saved in the local data repository 500 corresponding to the particular material testing system 100. In some examples, the accessibility data 408 may be updated to reflect the administrator's selections.

In the example of FIG. 6, after block 602, the local file/data access process 600 proceeds to block 604 where the local file/data access process 600 makes one or more copies of the centrally stored files/data identified at block 602. The copied files/data are then locally stored in one or more local data repositories 500.

In some examples, local copies of all the local file/data subset identified at block 602 are stored in each local data repository 500 of the distributed material testing system 300 at block 604. In some examples, local copies of all the local file/data subset identified at block 602 are stored in only a particular subset of local data repositories 500 of the distributed material testing system 300 at block 604. In some examples, some local copies of some of the local file/data subset identified at block 602 are stored in some of the local data repositories 500 of the distributed material testing system 300, while other local copies of some others of the local file/data subset are stored in other local data repositories 500 at block 604. In some examples, the which particular copies of the local file/data subset identified at block 602 are stored in which particular local data repositories 500 at block 604 is based (e.g., at least in part) on the file accessibility data 408.

For example, the local file/data access process 600 may store files/data identified/selected by a particular user for offline storage in local data repositories 500 of material testing systems 100 that the user is authorized to use. In such an example, the local file/data access process 600 may identify the user based on credentials provided by the user when the user logs in, and identify the user as being part of a particular team based on the team settings 404c. The team settings 404c may additionally identify the user's particular team as being authorized to perform tests on/using only a subset of material testing systems 100 of the distributed material testing system 300. In such an example, the accessibility data 408 may indicate (and/or be updated to indicate) that the local file/data access process 600 need only store local copies of the files/data that the user selected to be available in the local data repositories 500 of the material testing systems 100 on which the user's team is authorized to perform tests.

Additionally, or alternatively, in such an example, the local file/data access process 600 may store local copies of the event records 406 for each material testing systems 100 on which the user's team is authorized to perform tests (and/or which are compatible with the test file(s) 402 the identified at block 602). Additionally, or alternatively, in such an example, the local file/data access process 600 may store local copies of some or all of the settings 404 necessary for performing tests using the material testing systems 100 on which the user's team is authorized to perform tests (and/or which are compatible with the test file(s) 402 identified at block 602).

In the example of FIG. 6, after block 604, the local file/data access process 600 proceeds to block 606, where the local file/data access process 600 periodically synchronizes the local file/data copies stored in the local data repositories 500 at block 604 with their file/data counterparts stored in the central data repository 400. In some examples, this synchronization ensures that any changes to the original file/data stored in the central data repository 400 are duplicated in the local file/data copies stored in the local data repositories 500. In some examples, the synchronization at block 606 involves comparing each local file/data copy in a local data repository 500 with the corresponding original file/data in the central data repository 400, and updating the local file/data copy based on any differences. In some examples, updating the local file/data copy may involve replacing the local file/data copy with a new copy if differences are detected. In some examples, the comparison may be skipped, and the local file/data access process 600 may simply periodically replace each the local file/data copy with a new copy while the central data repository 400 remains accessible.

After block 606, the local file/data access process 600 proceeds to block 608 where the local file/data access process 600 determines whether the central data repository 400 and/or communication network 220 remains connected and/or accessible to (e.g., each testing workstation 202 of) each material testing system 100. In some examples, the determination may involve sending one or more test signals across the communication network 220 and/or to/from the central data repository 400, central server 302, local server 350, and/or testing workstation 202. In some examples, this determination is only performed by the local file/data access process 600 for certain material testing systems 100 (e.g., where multiple instances of the local file/data access process 600 execute simultaneously). If the central data repository 400 and/or communication network 220 remains connected and/or accessible, the local file/data access process 600 returns to block 602.

If the local file/data access process 600 determines that the central data repository 400 and/or communication network 220 has become disconnected from and/or inaccessible to a particular material testing system 100 (and/or corresponding testing workstation 202), the local file/data access process 600 proceeds to block 610. At block 610, the local file/data access process 600 makes the local files/data copies stored in the local data repository 500 of each disconnected material testing system 100 available to the corresponding material testing workstation 202. For example, the testing workstation 202 may be configured to usually look to the central data repository 400 for the files/data used for testing (e.g., in case the centralized files/data are more up to date than the local copies). In such an example, at block 610, the local file/data access process 600 may reconfigure the testing workstation 202 to obtain the files/data needed for testing from the local data repository 500 instead. In some examples, while disconnected from the central data repository 400, the material testing system(s) 100 may perform one or more tests using the local file/data copies.

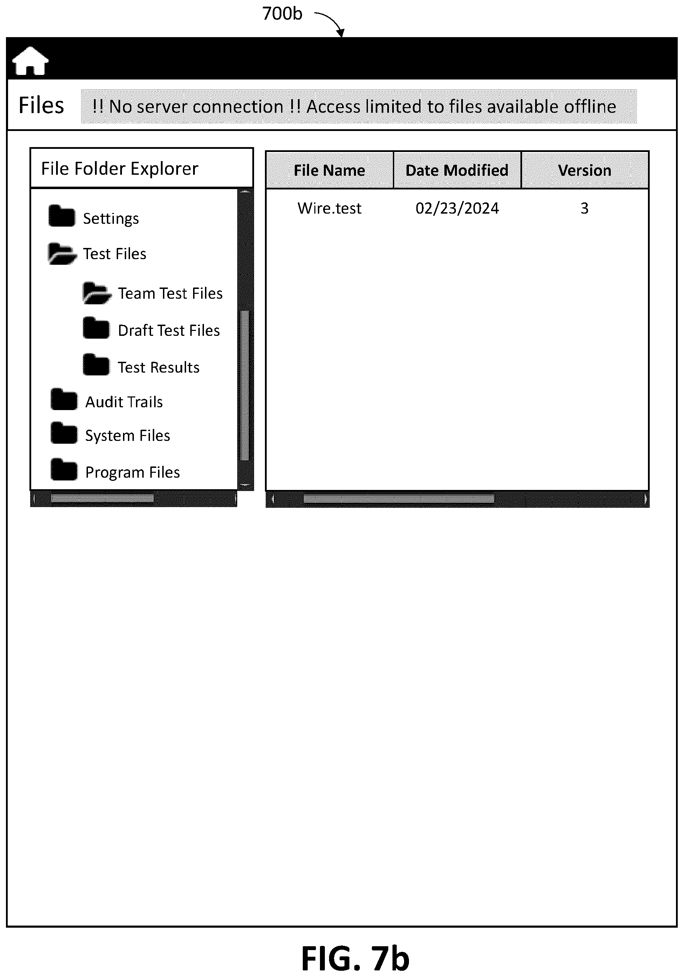

FIG. 7b shows an example of a GUI 700b that might be shown to a user (e.g., via the UI 204) when the access to and/or connection with the central data repository 400 and/or communication network 220 is interrupted. As shown, the GUI 700b includes a notification to the user that access to and/or connection with the central data repository 400 and/or communication network 220 has been interrupted. Additionally, the file list window of the GUI 700b shows most of the files previously shown in the GUI 700a of FIG. 7a to no longer be available and/or accessible. The file list window of the GUI 700b shows only the wire test file 402 as being accessible in the selected file folder, as the wire test file 402 was the only file identified/selected to be available when the central data repository 400 and/or communication network 220 has been interrupted (e.g., in the GUI 700a of FIG. 7a).

In the example of FIG. 6, after block 610, the local file/data access process 600 proceeds to block 612 where the local file/data access process 600 checks whether the material testing system(s) 100 found to be disconnected from the central data repository 400 and/or communication network 220 at block 608 is still disconnected. In some examples, this check may be similar (and/or identical) to the check performed at block 608. In some examples, if a particular material testing system 100 is still disconnected, the local file/data access process 600 returns to block 610 for that material testing system 100. In some examples, if a particular material testing system 100 has been reconnected, the local file/data access process 600 proceeds to block 614 with respect to that particular material testing system 100 (and/or local data repository 500).

In the example of FIG. 6, at block 614, the local file/data access process 600 synchronizes the original files/data stored in the central data repository 400 with the local files/data stored in the local data repositories 500. In some examples, this synchronization may be approximately the reverse of the synchronization described with respect to block 606. In some examples, this reverse synchronization ensures that any changes made to the local files/data stored in the local data repositories 500 while access to the central data repository 400 and/or communication network was interrupted can be duplicated in the files/data stored in the central data repository 400 once access is restored. In some examples, the reverse synchronization at block 614 only occurs in response to user input requesting to synchronize (e.g., received via the UI 204 and/or remote interface(s) 230).

In some examples, there may be conflicts that arise during the resynchronization of block 614. For example, a test file 402 stored in the central data repository 400 may be updated (e.g., via the UI 204 and/or remote interface 230) while a material testing system 100 has become disconnected from the central data repository 400. If a local copy of the same test file 402 is also updated (e.g., differently) in the corresponding local data repository 500 while the material testing system 100 is disconnected, then there will be a conflict as to which test file 402 to keep in the central data repository 400 when the material testing system 100 is reconnected with the central data repository 400.

In some examples, the local file/data access process 600 may perform some conflict resolution at block 614. For example, the local file/data access process 600 may forego resynchronization, overwrite the centrally stored files/data with the locally stored files/data, rename the locally (and/or centrally) stored files/data, and/or move the locally (and/or centrally) stored files/data to resolve the conflict. In some examples, settings 404 may be prohibited from being moved and/or renamed to resolve a conflict (e.g., in case the names and/or storage locations of the settings are hardcoded into the distributed material testing system 300). In some examples, the local file/data access process 600 may decide on a course of conflict resolution based on input from a user and/or administrator.

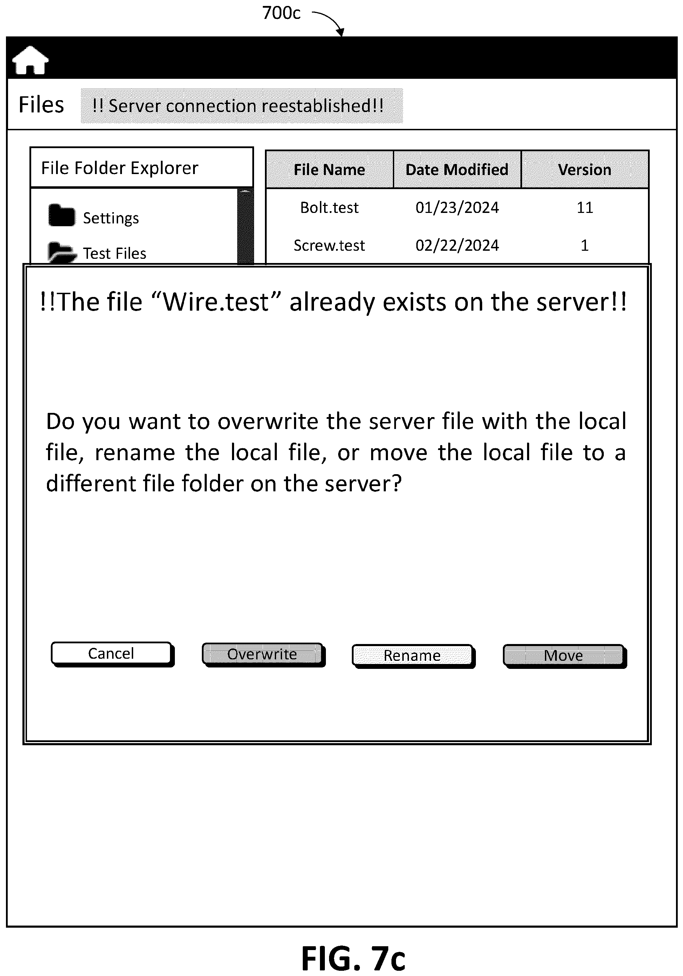

FIG. 7c shows an example of a GUI 700c that includes a conflict resolution window that might be shown to a user at block 614 if there is a conflict. As shown, the conflict resolution window notifies the user that there is a conflict with respect to the wire test file 402 that was saved in a local data repository 500 and that also exists in the central data repository 400. The conflict resolution window additionally gives the user the option to either cancel the resynchronization, overwrite the central copy of the test file 402 with the local copy, rename the central and/or local copy of the test file 402, or relocate the central and/or local copy of the test file 402. After the file resynchronization of block 614, the local file/data access process 600 is shown returning to block 602 in the example of FIG. 6 (though, in some examples, the local file/data access process 600 may end instead).

The disclosed distributed material testing system 300 and local file/data access process 600 stores local copies of selected files/data (e.g., used for material testing) in a local data repository 500, so that at least some material testing can continue in at least some capacity if the central data repository 400 and/or communication network 220 becomes inaccessible. If access to the central data repository 400 and/or communication network 220 becomes temporarily interrupted, the data and/or files stored in the local data repository 500 may be used by the testing system 100 to conduct material tests. Once access to the central data repository 400 and/or communication network 220 is restored, the central data repository 400 and local data repository 500 may be resynchronized, so that any changes to the data and/or files stored in the local data repository 500 that occurred while access to the central data repository 400 was interrupted can be duplicated in the corresponding data and/or files stored in the central data repository 400.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, applicationspecific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an applicationspecific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.
Certain embodiments of the invention are described in the following clauses:
Clause 1. A non-transitory computer readable medium comprising:
   machine readable instructions which, when executed by processing circuitry, cause the processing circuitry to:
   determine, based on file accessibility data, whether a remote file stored in a remote data repository should remain accessible when the remote data repository, or a communication network connecting a testing workstation to the remote data repository, becomes inaccessible to the testing workstation,
   in response to determining the remote file should remain accessible, create a local file copy of the remote file and store the local file copy,
   while the remote data repository remains accessible to the testing workstation through the communication network, periodically update the local file copy based on the remote file, and
   in response to the remote data repository, or the communication network, being inaccessible to the testing workstation, make the local file copy available to the testing workstation.
Clause 2. The non-transitory computer readable medium of clause 1, wherein the remote file comprises:
   a remote test file that defines a method of conducting a test of a material specimen on a material testing machine, or of analyzing test results of the test,
   a test result file that is representative of the test results,
   a remote event record that indicates when one or more events occurred during use of a material testing system, the material testing system comprising the material testing machine and a testing workstation configured to control the material testing machine to conduct the test of the material specimen, or
   remote settings representative of a security setting, a traceability setting, a user setting, or a team setting.
Clause 3. The non-transitory computer readable medium of clause 2, wherein the security setting indicates which users have permission to access, edit, or execute a test file, or the traceability setting indicates how many reviews are needed before a test file can become active.
Clause 4. The non-transitory computer readable medium of clause 2, wherein the user setting indicates an identifier or credential of a user, or the team setting indicates a particular team to which a particular user belongs.
Clause 5. The non-transitory computer readable medium of clause 1, wherein the machine readable instructions, when executed by processing circuitry, further cause the processing circuitry to:
   while the remote data repository remains accessible to the testing workstation through the communication network, periodically determine whether a change has been made to the remote file, and
   in response to determining the change has been made to the test file, update the local file copy based on the change to the remote file.
Clause 6. The non-transitory computer readable medium of clause 1, wherein the machine readable instructions, when executed by processing circuitry, further cause the processing circuitry to send the local test file copy to the remote data repository after the remote data repository or the communication network again becomes accessible to the testing workstation.
Clause 7. The non-transitory computer readable medium of clause 1, wherein the machine readable instructions, when executed by processing circuitry, further cause the processing circuitry to update the file accessibility data based on the one or more file accessibility signals received from a user interface, the one or more file accessibility signals indicating whether the remote file should remain accessible when the remote data repository is inaccessible to the testing workstation.
Clause 8. A material testing system, comprising:
   a material testing machine, comprising a test machine sensor, a test machine actuator, and a test machine controller configured to control the test machine actuator;
   a testing workstation configured to communicate with the test machine controller to conduct a test on the material testing machine, or analyze test results of the test, according to a test method set forth in a test file;
   a remote data repository storing a remote test file, the remote data repository being communicatively connected with the testing workstation through a communication network;
   a local data repository; and
   a local server comprising or in communication with the local data repository, the local server being in communication with the remote data repository through the communication network, the local server comprising server processing circuitry configured to:
      determine, based on file accessibility data, whether the remote test file should remain accessible when the testing workstation becomes disconnected from the communication network or the remote data repository,
      in response to determining the remote test file should remain accessible, store a local test file copy of the remote test file in the local data repository,
      while the local server remains in communication with the remote data repository through the communication network, periodically update the local test file copy, or create a new version of the local test file copy, based on the remote test file, and
      in response to the testing workstation becoming disconnected from the communication network or the remote data repository, make the local test file copy available to the testing workstation to conduct the test with the material testing machine, or analyze the test results.
Clause 9. The material testing system of clause 8, wherein the testing workstation is in direct communication with the local server or the local data repository, rather than being in communication through the communication network, or the testing workstation comprises the local server or the local data repository.
Clause 10. The material testing system of clause 8, wherein the server processing circuitry is configured to:
   while the local server remains in communication with the remote data repository through the communication network, periodically determine whether a change has been made to remote test file, and
   in response to determining the change has been made to the remote test file, update the local test file copy based on the change to the remote test file, or create the new version of the local test file copy based on the remote test file.
Clause 11. The material testing system of clause 8, wherein the local server is configured to send the local test file copy to the remote data repository after the testing workstation is reconnected with the communication network or the remote data repository.
Clause 12. The material testing system of clause **11,** wherein the remote data repository is configured to update the remote test file based on a difference between the remote test file and the local test file copy.
Clause 13. The material testing system of clause 8, further comprising a user interface in communication with the testing workstation, the user interface configured to receive an input from a user indicating whether the remote test file should remain accessible when the remote data repository is inaccessible.
Clause 14. The material testing system of clause 13, wherein the testing workstation is configured to send one or more file accessibility signals to the local server based on the input, and the local server is configured to update the file accessibility data based on the one or more file accessibility signals.
Clause 15. A method, comprising:
   determining, via server processing circuitry, and based on file accessibility data stored in a remote data repository or a local data repository, whether a remote test file should remain accessible to a testing workstation when the remote data repository, or a communication network connecting the testing workstation to the remote data repository, becomes inaccessible to the testing workstation;
   in response to determining the remote test file should remain accessible, storing a local test file copy of the remote test file in the local data repository via the server processing circuitry;
   while the remote data repository remains accessible to the testing workstation through the communication network, periodically updating the local test file copy based on the remote test file via the server processing circuitry; and
   in response to the remote data repository or the communication network becoming inaccessible to the testing workstation, making the local test file copy available to the testing workstation via the server processing circuitry.
Clause 16. The method of clause 15, wherein the local data repository is directly accessible to the testing workstation, rather than being accessible through the communication network, or the testing workstation comprises the local data repository.
Clause 17. The method of clause 15, further comprising:
   periodically determining, via the server processing circuitry, whether a change has been made to remote test file while the local server remains in communication with the remote data repository through the communication network; and
   in response to determining the change has been made to the remote test file, updating the local test file copy, via the server processing circuitry based on the change to the remote test file.
Clause 18. The method of clause 15, further comprising sending the local test file copy to the remote data repository, via the server processing circuitry, after the remote data repository and the communication network once again becomes accessible to the testing workstation.
Clause 19. The method of clause 18, further comprising:
   determining, via the server processing circuitry, whether to update the remote test file based on a difference between the remote test file and the local test file copy; and
   updating the remote test file based on a difference between the remote test file and the local test tile copy in response to determining to update the remote test file.
Clause 20. The method of clause 15, further comprising updating the file accessibility data based on user input received via a user interface that is in communication with the testing workstation, the user input indicating whether the remote test file should remain accessible to the testing workstation when the remote data repository is inaccessible to the testing workstation.

## Claims

1. A non-transitory computer readable medium comprising:
machine readable instructions which, when executed by processing circuitry, cause the processing circuitry to:
determine, based on file accessibility data, whether a remote file stored in a remote data repository should remain accessible when the remote data repository, or a communication network connecting a testing workstation to the remote data repository, becomes inaccessible to the testing workstation,
in response to determining the remote file should remain accessible, create a local file copy of the remote file and store the local file copy,
while the remote data repository remains accessible to the testing workstation through the communication network, periodically update the local file copy based on the remote file, and
in response to the remote data repository, or the communication network, being inaccessible to the testing workstation, make the local file copy available to the testing workstation.

2. The non-transitory computer readable medium of claim 1, wherein the remote file comprises:
a remote test file that defines a method of conducting a test of a material specimen on a material testing machine, or of analyzing test results of the test,
a test result file that is representative of the test results,
a remote event record that indicates when one or more events occurred during use of a material testing system, the material testing system comprising the material testing machine and a testing workstation configured to control the material testing machine to conduct the test of the material specimen, or
remote settings representative of a security setting, a traceability setting, a user setting, or a team setting.

3. The non-transitory computer readable medium of claim 2, wherein the security setting indicates which users have permission to access, edit, or execute a test file, or the traceability setting indicates how many reviews are needed before a test file can become active, and/or wherein the user setting indicates an identifier or credential of a user, or the team setting indicates a particular team to which a particular user belongs.

4. The non-transitory computer readable medium of any one of claims 1 to 3, wherein the machine readable instructions, when executed by processing circuitry, further cause the processing circuitry to:
while the remote data repository remains accessible to the testing workstation through the communication network, periodically determine whether a change has been made to the remote file, and
in response to determining the change has been made to the test file, update the local file copy based on the change to the remote file, and/or
wherein the machine readable instructions, when executed by processing circuitry, further cause the processing circuitry to send the local test file copy to the remote data repository after the remote data repository or the communication network again becomes accessible to the testing workstation.

5. The non-transitory computer readable medium of any one of claims 1 to 4, wherein the machine readable instructions, when executed by processing circuitry, further cause the processing circuitry to update the file accessibility data based on the one or more file accessibility signals received from a user interface, the one or more file accessibility signals indicating whether the remote file should remain accessible when the remote data repository is inaccessible to the testing workstation.

6. A material testing system, comprising:
a material testing machine, comprising a test machine sensor, a test machine actuator, and a test machine controller configured to control the test machine actuator;
a testing workstation configured to communicate with the test machine controller to conduct a test on the material testing machine, or analyze test results of the test, according to a test method set forth in a test file;
a remote data repository storing a remote test file, the remote data repository being communicatively connected with the testing workstation through a communication network;
a local data repository; and
a local server comprising or in communication with the local data repository, the local server being in communication with the remote data repository through the communication network, the local server comprising server processing circuitry configured to:
determine, based on file accessibility data, whether the remote test file should remain accessible when the testing workstation becomes disconnected from the communication network or the remote data repository,
in response to determining the remote test file should remain accessible, store a local test file copy of the remote test file in the local data repository,
while the local server remains in communication with the remote data repository through the communication network, periodically update the local test file copy, or create a new version of the local test file copy, based on the remote test file, and
in response to the testing workstation becoming disconnected from the communication network or the remote data repository, make the local test file copy available to the testing workstation to conduct the test with the material testing machine, or analyze the test results.

7. The material testing system of claim 6, wherein the testing workstation is in direct communication with the local server or the local data repository, rather than being in communication through the communication network, or the testing workstation comprises the local server or the local data repository.

8. The material testing system of claim 6 or claim 7, wherein the server processing circuitry is configured to:
while the local server remains in communication with the remote data repository through the communication network, periodically determine whether a change has been made to remote test file, and
in response to determining the change has been made to the remote test file, update the local test file copy based on the change to the remote test file, or create the new version of the local test file copy based on the remote test file.

9. The material testing system of any one of claims 6 to 8, wherein the local server is configured to send the local test file copy to the remote data repository after the testing workstation is reconnected with the communication network or the remote data repository, and optionally wherein the remote data repository is configured to update the remote test file based on a difference between the remote test file and the local test file copy.

10. The material testing system of any one of claims 6 to 9, further comprising a user interface in communication with the testing workstation, the user interface configured to receive an input from a user indicating whether the remote test file should remain accessible when the remote data repository is inaccessible, and optionally
wherein the testing workstation is configured to send one or more file accessibility signals to the local server based on the input, and the local server is configured to update the file accessibility data based on the one or more file accessibility signals.

11. A method, comprising:
determining, via server processing circuitry, and based on file accessibility data stored in a remote data repository or a local data repository, whether a remote test file should remain accessible to a testing workstation when the remote data repository, or a communication network connecting the testing workstation to the remote data repository, becomes inaccessible to the testing workstation;
in response to determining the remote test file should remain accessible, storing a local test file copy of the remote test file in the local data repository via the server processing circuitry;
while the remote data repository remains accessible to the testing workstation through the communication network, periodically updating the local test file copy based on the remote test file via the server processing circuitry; and
in response to the remote data repository or the communication network becoming inaccessible to the testing workstation, making the local test file copy available to the testing workstation via the server processing circuitry.

12. The method of claim 11, wherein the local data repository is directly accessible to the testing workstation, rather than being accessible through the communication network, or the testing workstation comprises the local data repository.

13. The method of claim 11 or claim 12, further comprising:
periodically determining, via the server processing circuitry, whether a change has been made to remote test file while the local server remains in communication with the remote data repository through the communication network; and
in response to determining the change has been made to the remote test file, updating the local test file copy, via the server processing circuitry based on the change to the remote test file.

14. The method of any one of claims 11 to 13, further comprising sending the local test file copy to the remote data repository, via the server processing circuitry, after the remote data repository and the communication network once again becomes accessible to the testing workstation, and optionally
the method further comprising:
determining, via the server processing circuitry, whether to update the remote test file based on a difference between the remote test file and the local test file copy; and
updating the remote test file based on a difference between the remote test file and the local test tile copy in response to determining to update the remote test file.

15. The method of any one of claims 11 to 14, further comprising updating the file accessibility data based on user input received via a user interface that is in communication with the testing workstation, the user input indicating whether the remote test file should remain accessible to the testing workstation when the remote data repository is inaccessible to the testing workstation.
